# EUROPEAN PATENT APPLICATION

(11) **EP 2 916 000 A1**
(43) Date of publication of application: **09.09.2015**
(21) Application number: 14000752.7
(22) Date of filing: 03.03.2014
(51) Int. Cl.: F03D 9/00, B64B 1/00, F03D 9/02

(54) **Ligher-than-air device converting solar and wind energy**

(71) Applicant: Chen, Chia-Chern, Tainan (TW)
(72) Inventor: Chen, Chia-Chern, Tainan (TW)
(74) Representative: Zeitler Volpert Kandlbinder Patent- und Rechtsanwälte Partnerschaft mbB

(57) **Abstract**

A power generation device floating in the air includes a lifting device 1, a connection device 2 and a ground device 3. The lifting device 1 is consisted of plural buoyant units 10 with solar cells 11 and wind turbines 12 respectively located on the top and lower portions thereof. The connection device 2 is connected between the lifting device 1 and the ground device 3. The main functions of the ground device 3 are power alternation, power distribution and power storage. The ground device 3 is connected with power supply network 30 in parallel in order to deliver power to users 31. The solar cells 11 and the wind turbines 12 are located in the air instead of on ground. The weather does not affect the efficiency of the power generation device.

## Description

### BACKGROUND OF THE INVENTION

### 1. Fields of the invention

The present invention relates to a power generation device, and more particularly, to a power generation device floating in the air and comprising solar cells in large area and wind turbines.

### 2. Descriptions of Related Art

The types of conventional power station mainly are fossil-fuel power station, nuclear power station and hydroelectric power station. The nuclear power station can provide energy in low cost and high efficiency, but there are some concerns such as the radiation leakage, radioactive waste disposal which if they weren't dealt and handled properly, the damage to the environment and to eco-system would be permanently irrevocable. The fossil-fuel power station consumes maximum fuels to provide energy and cause global warming and air pollution which it has been approved as a part of the factor so that it is harmful to the eco-system. Similarly, the hydroelectric power station is also harmful to the eco-system. The other method to produce energy, such as geothermal, cannot be used generally limited to particular requirement like terrain condition. The solar power and the wind power can provide clean energy if compared with the other power generation, however, they are limited to some conditions. For example, installation of the solar power cells / panels and the relative equipments require large area, and the efficiency is affected by the weather, terrain, latitude and seasons. Furthermore, the efficiency of producing energy is also limited to insolation so that no energy would be produced in night or in rainy day and energy supply may not be steadily from season to season. The other method to produce solar power is using "concentrate solar power system" to gather lights into a beam by having mirrors or lenses and it might cause light pollution. The wind power plant is also limited to terrain and weather and makes noise while operating.

### SUMMARY OF THE INVENTION

The present invention can provide a power generation device that floats in the air so as to improve the shortcomings mentioned above.

Generally, the low clouds are located up to 2000 meters from surface disregard the altitude. The weather is more stable above the height. The middle and high clouds are formed less cloud and the sunlight can easily transmit through the clouds. Hence, the sunlight located height over 2,000 meters could be stronger and more stable no matter of clouds or terrain. Further, the temperature would be decreases along with the increase of the height so that the temperature at higher position is lower than that the temperature on the ground, and the lower temperature could be helpful to increases the conversion of sunlight into energy. Furthermore, dust in air would be getting less and less as per height increasing so that the sunlight is not likely to be shielded. In other words, if the solar power generation could be positioned in the air higher than 2,000 meters from surface, the conversion from sunlight in to energy would be much better than the conversion of the solar cell on the ground and the best advantage would be no ground equipment needed.

The solar power generation is also restricted by weather condition, it means that the power generation is low in rainy days, in the night and season from season. Luckily, if the wind power generation is placed in the air over 2,000 meters, the wind would be stronger and steadily so as to wind power would be generated steadily and wind power generation would be not restricted by weather condition or terrain. Therefore, if both of the solar power generation and the wind power generation could be placed together in the air more than 2,000 meters, the power generation efficiency will be stable and high no matter of daytime, night time, sunny days or rainy days.

The present invention relates to a power generation device floating in the air, and comprises at least one lifting device, at least one connection device and at least one ground device. The at least one lifting device has a buoyant unit lighter than the air. Multiple solar cells are installed on the top portion of the buoyant unit, and wind turbines are installed on the lower portion of the buoyant unit. The at least one connection device is connected between the at least one lifting device and the at least one ground device. The main functions of the at least one ground device are power alternation, power distribution and power storage. The at least one ground device is connected with power supply network in parallel so that power could be delivered to users thru the power network from the ground device.

Preferably, the buoyant unit of the at least one lifting device can be an airship. Plural gas-containing envelopes are aligned in similar way as the partition in boat cabin. The gas-containing envelopes are fulfilled with gases lighter than air and connected to each other. The at least one lifting device is powered and has a control or operation cabin.

Preferably, the at least one connection device can be a cable which is made of strong, durable and light material, and comprises multiple braids to reinforce the strength and conductive wire inserted inside of the cable centrally so as to the conductive wire can be protected by the cable. Preferably, the at least one lifting device are made of the plural buoyant units aligned side by side in order to be lifted by having enough surface to obtain buoyant force. Multiple solar cells are installed on the top portion of the lifting device and wind turbines are installed on the lower portion of the lifting device.

Preferably, a small buoyant device with an operating or pilot cabin is used a fastener member and its' respectively connection device to connect the connection device between the lifting device and the ground device so as to send workers/ staffs upward or downward between the lifting device and the ground.

Preferably, an adaptor is connected between the at least one ground device and the at least one connection device. A cable is used to connected between the adaptor and the at least one ground device. The at least one ground device is installed on the land and the adaptor is installed on the land or on the sea so as to the lifting device can fly in the air to avoid any crowded object.

Preferably, the at least one lifting device has a device reflecting radar waves, multiple warning lights and lightning strike protection system. The at least one lifting device is located away from air flight paths to prevent impact from aircrafts. The lightning protection system prevents the device being struck from lightning.

The advantage of this present invention is able to lift heavily solar cells/ panels in large area and wind turbines device in the air without occupying too much space on the ground. The power generation efficiency is stable without being restricted to the weather conditions.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the parts of the power generation device of the present invention;
Fig. 2 shows that the buoyant unit of the lifting device is composed of multiple gas-containing envelopes;
Fig. 3 shows that multiple lifting devices are connected to the ground devices by using multiple connection devices;
Fig. 4 is a perspective view to show the lifting device of the second embodiment of the present invention;
Fig. 5 shows the lifting device and the buoyant unit of the present invention, and
Fig. 6 shows that the lifting device is located above the sea.

### DETAILED DESCRIPTION OF THE PREFERRED EMBODIMENT

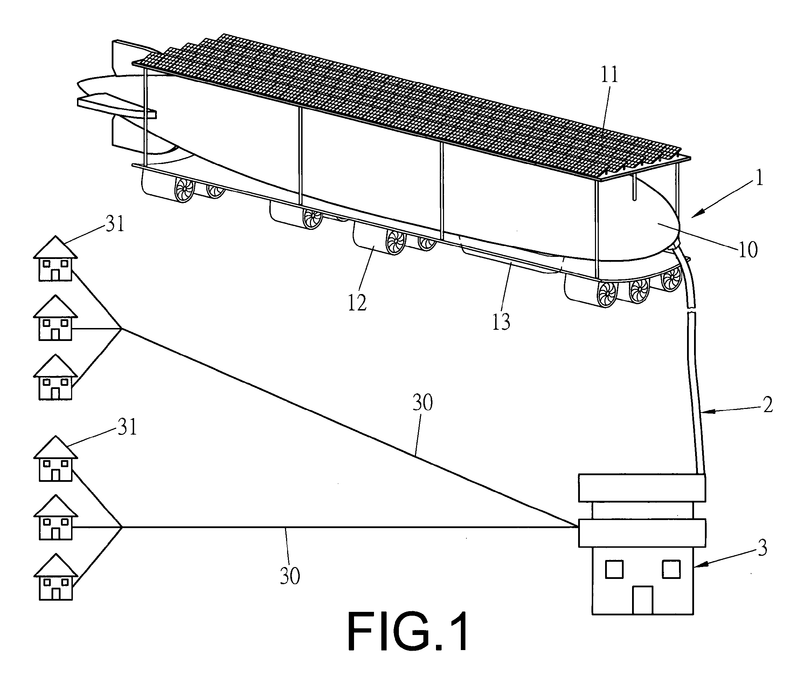

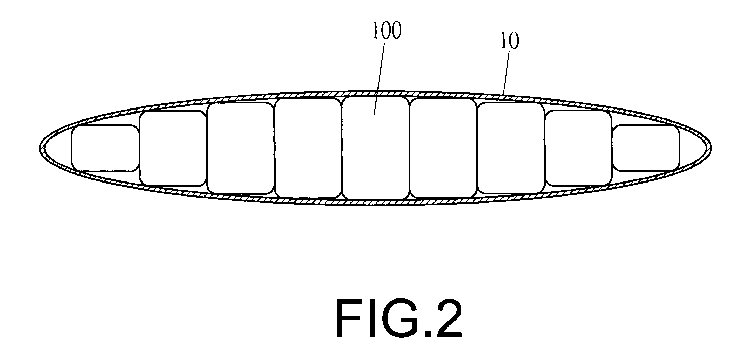

Referring to Fig. 1, the power generation device of the present invention comprises at least one lifting device 1, at least one connection device 2 and at least one ground device 3. The at least one lifting device 1 is consisted of at lease one buoyant unit 10 which is fulfilled gas lighter than air. Multiple solar cells 11 are installed on the top portion of the buoyant unit 10, and multiple wind turbines 12 are installed on the lower portion of the buoyant unit 10. The buoyant unit 10 can be an airship. For safety reason, plural gas-containing envelopes 10 are aligned in similar way as the partition in boat cabin, and the gas-containing envelopes 100 are fulfilled with gases lighter than air and connected to each other as shown in Fig. 2. The at least one lifting device 1 is powered and has a control or operation cabin 13. The at least one connection device 2 is connected between the at least one lifting device 1 and the at least one ground device 3. The at least one connection device 2 can be a cable consisted of conductive wire inserted inside of the cable centrally. The main function of the at least one ground device 3 are power alternation, power distribution and power storage. The at least one ground device 3 connected with power supply network 30 in parallel. The at least one ground device 3 can deliver power which is generated in the at least one lifting device 1 to users 31 thru the power supply network 30.

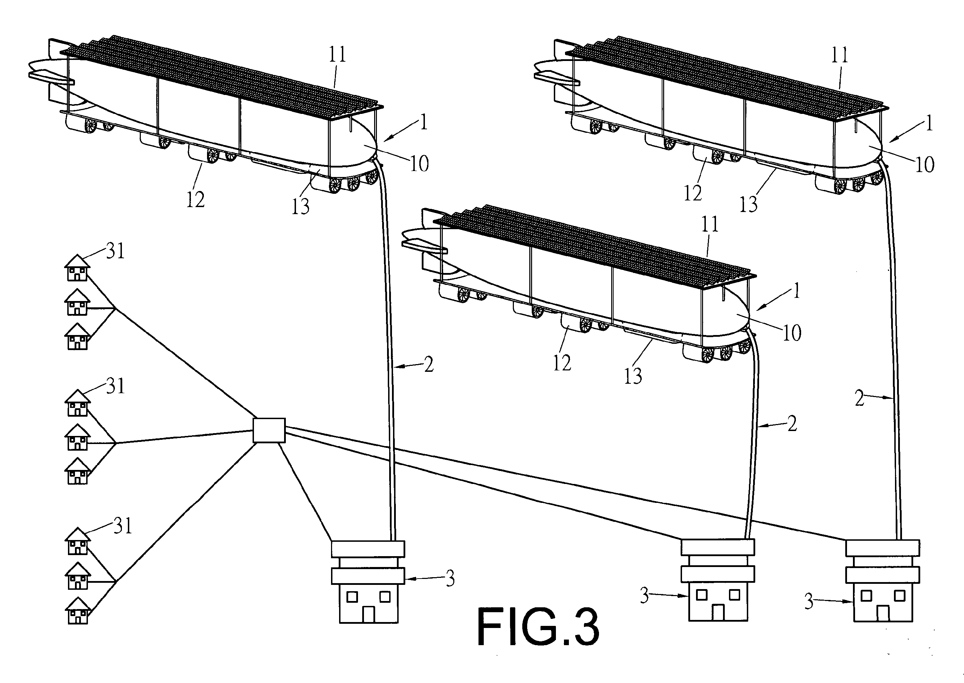

As shown in Fig. 3, the multiple lifting devices 1 are connected to the multiple ground devices 3 by using multiple connection devices 2. The solar cells 11 and the wind turbines 12 on the lifting devices 1 can generate power and then deliver the power to the ground devices 3 by the connection devices 2 in order to alternate, distribute or/and store power. Then, the ground device 3 can deliver the power to users 31 thru the power supply network 30. The extra power can be stored in the ground devices 3.

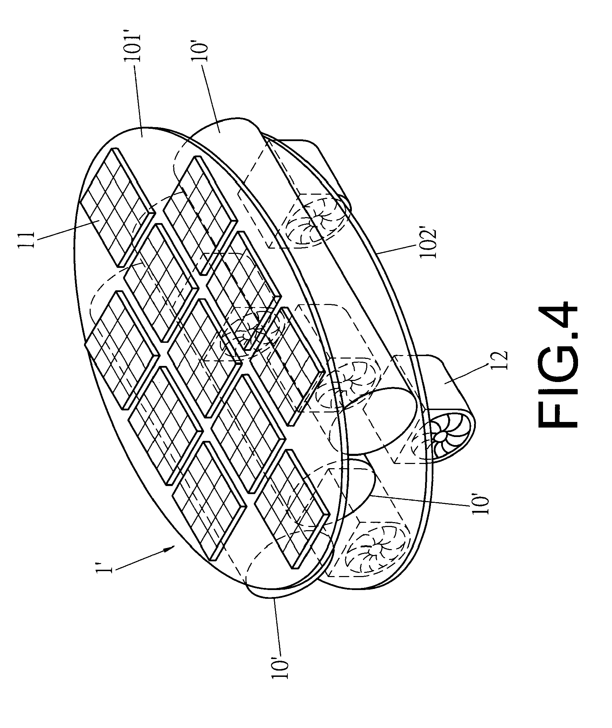

The present invent can lift heavy solar cells 11 in large area and the multiple wind turbines 12 in the air and can be designed as per aerodynamic to create enough buoyant force. As shown in Fig. 4 which is the second embodiment, wherein the lifting device 1' is composed of multiple buoyant units 10' aligned side by side to form mass surface in order to obtain buoyant force. The multiple solar cells 11 on a top case 101' of the lifting device 1', and the multiple wind turbines 12 on the lower case 102' of the lifting device 1'. The shapes of the top case 101' and the bottom case 102' may be varied according to needs.

The lifting device 1 can be designed in one or more long oval shapes or similar shape as per aerodynamic. The lifting device 1 can be fixed by the one connection device 2 in the air, and the lifting device 1 can be floated along with wind direction.

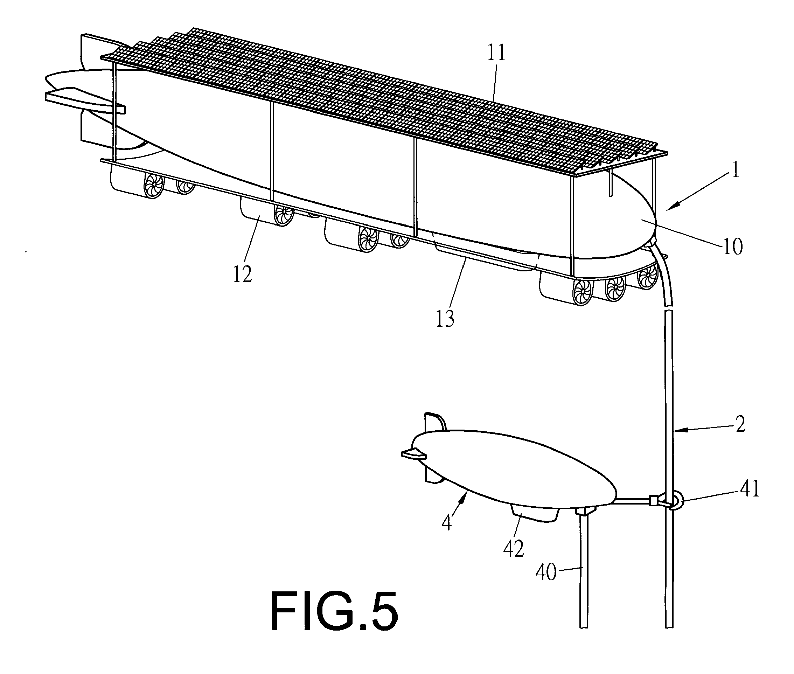

The lifting device 1 is powered and cooperated with propeller or turbine system by using electric power or fuel and is contained a control or operation cabin 13. The lifting device 1 is also installed balancing system such as tail plane or wings and a rotation device such as rudder to maintain balance and direction. The control or operation cabinet 13 allows the lifting device 1 to be operated manually or controlled by wireless remote control, to move to desired positions. The lifting device 1 can be maintained or guarded automatically or by sending persons to the control or operation cabinet 13. A person or people can be carried by a small buoyant device 4. As shown in Fig. 5, the small buoyant device 4 is connected to ground by a connection device 40 such as a cable. The small buoyant device 4 is connected to the connection device 2 by a fastening member 41 between the lifting device 1 and the ground device 3. The small buoyant device 4 has a control or operation cabin 42. By the connection device 2 between the lifting device 1 and the ground device 3, and the small buoyant device 4 fastening to the connection device 2, the small buoyant device 4 can be moved up and down to the desired positions.

The lifting device 1 has a device reflecting radar waves and multiple warning lights. The lifting device 1 is located away from air flight paths to prevent impact from aircrafts. The lifting device 1 also has a lightning strike protection system which prevents the device being struck from lightning.

The multiple solar cells 11 (solar panels) on the top portion of the lifting device 1 are connected to each other in parallel or /and in series to generate power in adaptable arrangement. The angular inclination of each solar cell 11 can be pre-set according to the latitude position, height and the average sunlight angle. The inclination can also be controlled automatically by using sensors to automatically sense sunlight to obtain the maximum efficiency. The lifting device 1 has wind turbines 12 (wind power generator) at the optimal positions and distances on the lower portion thereof. The shape of the bottom portion varies to the arrangement of the wind turbines 12, the purpose is to distribute and guide the wind to each of the wind turbines 12 so as to obtain the maximum efficiency, and also keep the lifting device 1 in balance and stable. If the lifting device 1 is an airship in a long oval body, so that the wind power turbines 12 can change their directions as per the wind direction when the lifting device 1 automatically changes its direction because of the wind.

The connection device 2 can be a cable which is made by strong, durable and light material such as carbon fibers and comprises multiple braids to reinforce the strength and conductive wires inserted insider of the cable centrally so as to deliver power generated by solar cells 3 and wind turbines 12 to the ground device 3. The conductive wire can be protected by the cable.

The connection device 2 is controlled by the lifting device 1, when the lifting device 1 is moved to proper position on the top of the ground device 3 and the lifting device 1 releases the connection device 2 to the ground, the connection device 2 is then connected to the ground device 3 so as to connect the lifting device 1 with the ground device 3. The cable of the connection device 2 then can deliver the power generated in lifting device 1 to the ground device 3. The connection device 2 can also be used as a media of maintenance and supply as shown in Fig. 5.

When the lifting device 1 needs to be maintained or has to move away because of bed weather such as hurricanes/typhoons, the connection device 2 is accommodated by the lifting device 1. After the situation is clear, the connection device 2 is sent to its original position to be connected with the ground device 3. This can also be used to replace a new lifting device 1.

The present invention can choose a proper position to set the ground device 3 so as to be connected with the power supply network 30 in parallel. The lifting device 1 and the connection device 2 are manufactured in factory. After the lifting device 1, the connection device 2 and the ground device 3 are finished and pilot-run, the lifting device 1 can be lifted in the air on the way to the ground device 3. The lifting device 1 releases the connection device 2 to ground in order to be connected to the ground device 3. The lifting device 1 is then located above the ground device 3 at proper height (the lifting device 1 is able to adjust its height and position). The conductive wire of the connection device 2 then sends the power generated in lifting device 1 to the ground device 3. The ground device 3 is connected with the power supply network 30 in parallel so as to send the power to the users 31. The extra power can be stored in the ground device 3.

The energy generated by the solar cells 11 is Direct Current (DC), and the wind turbines 12 can generate Direct Currents (DC) or Alternative Currents (AC), which means the AC must be converted into DC in order to be stored. In case of power supply, the DC can be converted into AC in the ground device 3 so as to be connected with the power supply network 30 in parallel. The arrangements of the wind power turbines 12 can be different ways varied with the shape of the bottom portion of the lifting device 1 to increase working efficiency.

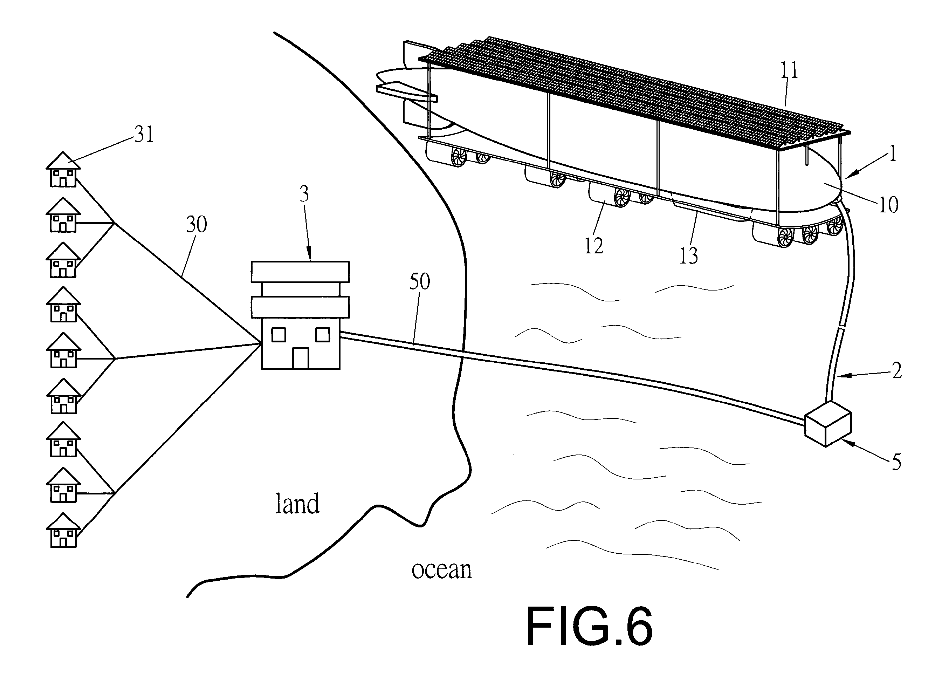

The adaptor 5 is connected between the ground device 3 and the connection device 2. A cable 50 is connected between the adaptor 5 and the ground device 3 as shown in Fig. 6. Therefore, the ground device 3 is set on the land and the adaptor 50 is set on the sea so as to float the lifting device 1 above the sea to avoid from the crowd objects on the ground. The adaptor 5 can also be set to the remote places such as on the mountains or by the sea, and the lifting device 1 is positioned in the air of the remote places.

There are many different ways to provide enough buoyant force to lift the heavy solar cells 11 in large area and the wind turbines 12, but after considering the cost, the manufacturing technics, the installation method, mobility and the positions that are located away from strong wind, the lighter-than-air buoyant carrier is preferably chosen.

The use of the lighter-than-air buoyant carrier can carry significant load. This method is matured over one hundred years and has been practiced commonly for a long time, such as the airship in the world war one. The average length of the airship is 220 to 250 meters and is able to carry over 15000 kilograms load. The airship can fly to 20000 feet high. The travel of the airship can across the Atlantic sea and the speed reaches 100 km/h. These records can be easily achieved by using the modern technology. For example, for an area of 6000 square meters with 300 meters long and 200 meters width of the device of the present invention, the silicone solar panels within 10 square meters can provide electric power of 1kW/h, such that the solar panels of 300m x 200m can generate 6000 kW/h. For six hours of sunshine per day, the power generated per year will be 6 x 6000 x 365= 13140000 degrees of electric power which is 0.39% of the amount of one thermal power generation plant. When added with the power generated by the wind turbines, the total amount of power generated by the turbines of the present invention as mentioned above will be more than 0.5% of the power generated from a mediate scale of thermal power generation plant. In other words, 200 lifting devices 1 of the present invention can replace one mediate scale of thermal power generation plant.

For establishing a solar power generation plant that produces the electric power equal to the electric power of a nuclear power generation plant needs 6750 acres of solar panels, the area is 14 times of the area required for a nuclear power generation plant. Only 700km x 700 km area of solar panels is needed to provide the electric power that is sufficient for the demand of the whole world. The present invention does not occupy too many spaces, low cost and the lifting devices 1 can stay in the air for 30 years, no fuel, no carbon released, no conflict and totally friendly to the environment.

The height of the lifting device 1 of the present invention can be controlled like the control of a submarine in the sea, so as to conveniently access the lifting device 1 to maintain it, and also is convenient for moving the lifting device 1 to a desired position when being installed. During bad weather such as typhoons, hurricanes, thunder storms, the present invention can be retrieved and then installed again when the weather is better.

For a power requirement of 13140000 degrees of electric power per year, the amount is equal to the amount of power generated by a small scale of thermal power generation plant, needs 60000 square meters of solar panels. Each square meter of the solar panels weight about 12.5 kilograms so that the total weight of the required solar panels is 60000 x 12.5=750 tones. The buoyant force for a cubic meters of Helium is 1.05 kilograms. Assume that the total weight including the solar panels is 10000 tons, 10000000 cubic kilograms of Helium is needed. If the lifting device 1 comprises "n" cylindrical buoyant units connected in parallel, and each buoyant unit has the length of 350 meters and the radius of 30 meters. The volume of each buoyant unit is 30 x 30 x 3.14 x 350=989100 cubic meters. The number "n" will be 10.11. In other words, we make the "n" to be 11, and the area occupied is 350 x 660 square meters which provides sufficient buoyant force in this example. If the large area of the solar panels is difficult to be made, the large area can be divided into four lifting devices 1 and each lifting device 1 is 60 x (175 x 330) square meters. Alternatively, four 60 x (180 x 350) square meters will be required if the lifting devices 1 required, and each lifting device 1 is composed of three parallel cylindrical buoyant unit has the diameter of 60 meters and the length of 350 meters. The buoyant force is sufficient even if the lifting devices 1 are added with the wind turbines, each small scale of wind turbine weights about 10 to 20 kilograms.

Technically, for the Zeppelin airship operating since 1910, the scale of the airship has the length of 236.5 meters and the diameter of 30.5 meters. The Hindenburg airship is even bigger than the Zeppelin airship, and has the length of 245 meters and the diameter of 41 meters. The material and the technics of today can easily build the lifting devices 1 with lighter weight and stronger strength, such as the use of carbon fibers to replace alloy. The modern fluid dynamics, aerodynamics and auto-control allow the modern airship being made larger and more efficient.

Over 3000 meters, the cloud is less, the duration of sunshine is longer, the wind is stable and the wind speed is faster so it is suitable for the solar cells 11 and the wind turbines 12 to generate power over there. Both the solar cells 11 and the wind turbines 12 (in case of increasing power generation) can be operated at the same time in daytime, only the wind turbines 12 operate during the night time and the extra power can be stored for further adjustment. Hence, the power generation device of the present invention meets the requirements of commercial operation.

The solar power generation directly converts sunlight into DC without producing carbon dioxide and the DC can be stored.

A mass power generation in large scale can cause power lost during power delivery, so, the multiple lifting devices 1 in different positions can solve the problem. The conventional method generates power with producing more pollutants in separated locations. The present invention is able to generate power at separated areas without causing air pollution. The power loss can also be reduced significantly.

While we have shown and described the embodiment in accordance with the present invention, it should be clear to those skilled in the art that further embodiments may be made without departing from the scope of the present invention.

## Claims

1. A power generation device floating in the air, comprising:
at least one lifting device 1, at least one connection device 2 and at least one ground device 3, the at least one lifting device 1 having a buoyant unit 10 which is lighter than the air, multiple solar cells 11 installed on top portion of the buoyant unit 10, wind turbines 12 installed on lower portion of the buoyant unit 10, the at least one connection device 2 connected between the at least one lifting device 1 and the at least one ground device 3, the at least one ground device 3 having main functions of power alternation, power distribution and power storage, the at least one ground device 3 connected with power supply network 30 in parallel in order to deliver power to users 31.

2. The device as claimed in claim 1, wherein the buoyant unit 10 of the at least one lifting device 1 is an airship and consisted of plural gas-containing envelopes 100 aligned in similar way as the partition in boat cabin and connected to each other, the at least one lifting 1 has its own power and has a control or operation cabinet 13.

3. The device as claimed in claim 1, wherein the at least one connection device 2 is a cable wherein conductive wire inserted inside of the cable centrally.

4. The device as claimed in claim 1, wherein the buoyant units 10 of the at least one lifting device 1 are formed side by side to create enough surface to obtain buoyant force, the multiple solar cells 11 are installed on a top portion of the buoyant units 10, and the wind turbines 12 are installed on a lower portion of the buoyant units 10.

5. The device as claimed in claim 1, wherein a small buoyant device 4 uses a fastening member 41 connecting to the connection device 2 between the lifting device 1 and the ground device 3, the small buoyant device 4 has a control or operation cabinet 42.

6. The device as claimed in claim 1, wherein an adaptor 5 is connected between the at least one ground device 3 and the at least one connection device 2, a cable is connected between the adaptor 5 and the at least one ground device 3.

7. The device as claimed in claim 1, wherein the at least one lifting device 1 has a device able to reflect radar waves, warning lights and a lightning protection system.
